# DEMANDE DE BREVET EUROPEEN

(11) **EP 2 735 778 A1**
(43) Date de publication de la demande: **28.05.2014**
(21) Numéro de dépôt: 13354043.5
(22) Date de dépôt: 26.11.2013
(51) Int. Cl.: F16K 31/44, F16K 31/05

(54) **Actionneur de vanne équipée d'un volant de commande**

(30) Priorité: 26.11.2012 FR 1203182
(71) Demandeur: Modec, 26760 Beaumont Les Valence (FR)
(72) Inventeur: Cote, Pierre-Yves, F-26120 Montmeyran (FR)
(74) Mandataire: Hecké, Gérard

(57) **Abrégé**

Actionneur de vanne équipée d'un volant de commande (2), le volant de commande (2) comportant une bordure externe (3) et au moins une ouverture (4 à 6), l'actionneur comprenant un moteur (20) et un support (22) configuré pour être entraîné en rotation par le moteur (20), le support (22) comportant au moins un orifice (24 à 26) et au moins un élément de butée (27 à 29) monté mobile en translation dans ledit orifice entre une position initiale dans laquelle l'élément de butée (27 à 29) est introduit dans ladite ouverture (4 à 6) du volant de commande (2) et une position de butée dans laquelle l'élément de butée (27 à 29) est en contact avec le volant de commande (2) pour l'entraîner en rotation.

## Description

### Domaine technique de l'invention

L'invention concerne les actionneurs de vanne équipée d'un volant de commande, et en particulier les volants de commande comportant une bordure externe et au moins une ouverture.

### État de la technique

Actuellement, on utilise des vannes pour distribuer des fluides qui sont commandées de façon manuelle à l'aide d'un volant de commande. La vanne comprend un obturateur couplé au volant de commande par un système d'engrenages, et le volant commande l'obturateur pour fermer ou ouvrir la vanne. Les volants de commandes comprennent généralement une bordure externe, ayant la forme d'un tore, reliée au centre du volant par plusieurs montants, et plusieurs ouvertures. La plupart des volants de commande comprennent trois montant séparant trois ouvertures et disposés de façon régulière dans le volant. Mais les volants peuvent comporter plus de montants et plus d'ouvertures. Ces volants de commande sont généralement difficiles à manoeuvrer, et on peut utiliser un actionneur motorisé pour les commander.

Certains actionneurs comprennent une tête en étoile munie d'un centre cylindrique et de plaques qui s'étendent transversalement depuis le centre cylindrique. La tête en étoile est placée sur le centre du volant de commande, et on vient visser des crochets aux extrémités des plaques pour accrocher les plaques sur la bordure externe du volant afin de maintenir la tête en étoile sur le volant. Puis, on place, sur la tête en étoile, une tête cylindrique motorisée pourvue d'un flasque qui peut être animée en rotation à l'aide du moteur de l'actionneur et qui coopère avec la tête en étoile pour l'animer en rotation afin de déplacer le volant de commande en rotation.

Il existe d'autres actionneurs comportant également une tête cylindrique motorisée pour animer en rotation un flasque. Le flasque est solidarisé au volant de commande à l'aide de tiges métalliques en forme de U qui entourent les montants du volant. Ces tiges sont vissées au flasque pour maintenir celui-ci contre le volant. Mais les tiges peuvent s'user, voire se déformer, lors d'utilisations répétées de l'actionneur.

De tels actionneurs nécessitent en outre des étapes de montage de leur tête motorisée qui sont longues et délicates. En effet de tels montages peuvent entraîner des accidents lorsque le flasque est mal positionné sur le volant de commande des vannes. Par ailleurs, ces actionneurs sont complexes et nécessitent de réaliser de nombreuses pièces différentes pour leur fonctionnement. En outre, les montages et démontages de tels actionneurs entraînent une usure rapide de leurs différentes pièces.

Le brevet américain US 7066192 divulgue un actionneur comportant un jeu d'adaptateurs de tailles variables pour attacher l'actionneur au centre du volant de commande d'une vanne. Mais un tel actionneur nécessite de réaliser de nombreuses pièces différentes pour son fonctionnement.

La demande de brevet américain US 2002/0096213 et le brevet américain US 6530557 divulguent un actionneur comprenant des vis qui traversent des ouvertures d'un volant de commande de vanne pour fixer l'actionneur au volant et entraîner ce dernier. Mais les étapes de montage de l'actionneur sont longues et délicates.

Le brevet américain US 6065735 divulgue un actionneur comportant des tiges qui passent à travers des ouvertures d'un volant de commande de vanne pour entraîner ce dernier. Mais un tel montage peut entraîner des accidents lorsque l'actionneur est mal positionné sur le volant de commande de la vanne.

### Objet de l'invention

L'objet de l'invention consiste à remédier à ces inconvénients, et plus particulièrement à fournir un actionneur motorisé qui s'accroche facilement sur des volants de commande pour vannes qui sont commandés manuellement.

Selon un aspect de l'invention, il est proposé un actionneur de vanne équipée d'un volant de commande, le volant de commande comportant une bordure externe et au moins une ouverture, l'actionneur comprenant un moteur et un support configuré pour être entraîné en rotation par le moteur.

Le support comporte au moins un orifice et au moins un élément de butée monté mobile en translation dans ledit orifice entre une position initiale dans laquelle l'élément de butée est introduit dans ladite ouverture du volant de commande et une position de butée dans laquelle l'élément de butée est en contact avec le volant de commande pour l'entraîner en rotation.

Ainsi, l'actionneur est équipé au préalable d'éléments de butée pré-montés sur l'actionneur, permettant en une seule étape de montage, de mettre en contact l'actionneur avec le volant afin de manoeuvrer ce dernier.

Le support peut comporter plusieurs orifices et plusieurs éléments de butée montés mobiles en translation dans respectivement les orifices, chaque orifice ayant une forme coudée.

Un tel actionneur peut s'adapter à différents volants de commande, notamment des volants ayant un nombre différent de montants.

Chaque élément de butée peut en outre être monté mobile en rotation autour d'un axe sensiblement perpendiculaire au support.

On améliore ainsi les déplacements en translation des éléments de butée dans les orifices du support.

Chaque élément de butée peut avoir une forme globalement conique, pour améliorer le maintien du support sur le volant lors de la manoeuvre de ce dernier.

Chaque élément de butée peut avoir une forme de cloche configurée pour coincer la bordure externe du volant de commande entre l'élément de butée et le support lorsque l'élément de butée est dans sa position de butée.

Les éléments de butée peuvent être en matière plastique.

Il n'est pas nécessaire d'avoir des éléments de butée en métal. La matière plastique permet d'éviter les étincelles lors des contacts avec le volant et répond aux différentes normes de travail en conditions explosives.

Le support peut avoir une forme globalement circulaire et chaque coude de chaque orifice forme un angle aigu non nul avec un rayon du support.

L'actionneur peut comprendre des moyens élastiques attachés à chaque élément de butée pour les maintenir dans leur position initiale lorsque le moteur est arrêté.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1, illustre schématiquement une vue de dessous d'un mode de réalisation d'un actionneur de vanne selon l'invention et une vue en perspective d'un volant de commande de vanne ;
- la figure 2, illustre de façon schématique une vue en coupe selon l'axe A-A de la figure 1 ;
- la figure 3, illustre schématiquement une vue éclatée en perspective d'un mode de réalisation d'un support et des éléments de butée de l'actionneur illustré à la figure 1 ;
- la figure 4, illustre de façon schématique une vue en coupe du support monté sur un volant de commande d'une vanne ; et
- la figure 5, illustre schématiquement une vue en perspective d'un mode de réalisation d'un support monté sur un volant de commande d'une vanne.

### Description détaillée

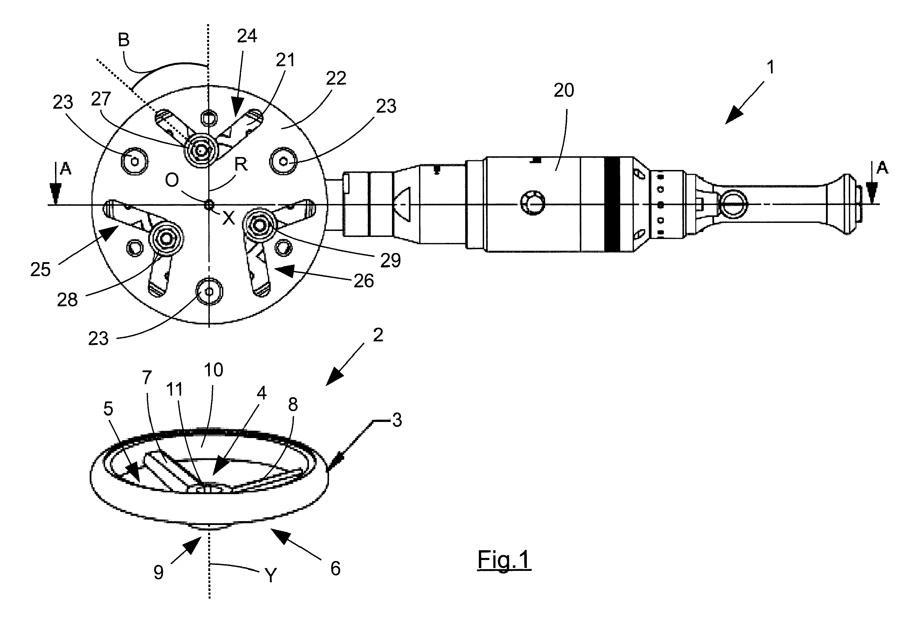

Sur la figure 1, on a représenté un actionneur 1 de vanne, non représentée à des fins de simplification, équipée d'un volant de commande 2 pour commander la vanne en ouverture ou en fermeture. Le volant de commande 2 comporte une bordure externe 3. De manière générale, la bordure externe 3 a la forme d'un tore. Le volant 2 comporte une ou plusieurs ouvertures 4 à 6 séparées entre elles par un ou plusieurs montants tubulaires 7 à 9, reliant chacun une face interne 10 de la bordure externe 3 avec le centre 11 du volant 2. Le volant de commande 2 peut avoir d'autres configurations, par exemple il peut comprendre deux montants et deux ouvertures, cinq montants et cinq ouvertures etc.

L'actionneur 1 comporte un moteur 20, un flasque 21 configuré pour être animé en rotation par le moteur 20 autour d'un axe principal X. L'axe principal X peut dans un plan longitudinal du moteur 20, ou préférentiellement sensiblement perpendiculaire à un plan longitudinal du moteur 20. Le plan longitudinal du moteur 20 correspond à la feuille de la figure 1. L'actionneur 1 comporte en outre un support 22 monté fixe sur le flasque 21 par des moyens de fixation 23, par exemple une ou plusieurs vis. Le moteur 20 peut être un moteur électrique, hydraulique, et de préférence pneumatique. Le support 22 peut avoir une forme parallélépipédique. En particulier, le support 22 a une forme globalement cylindrique. De préférence, le support 22 est circulaire de rayon R. En outre, le rayon R du support est adapté au rayon du volant de commande 2. Le rayon R du support peut être supérieur à celui du volant. Afin de diminuer le poids de l'actionneur 1, le rayon R du support 22 est de préférence compris entre la moitié du rayon et le rayon du volant de commande 2. On peut envisager de réaliser plusieurs supports 22 ayant des rayons R différents pour qu'ils puissent s'adapter aux différents rayons des volants de commande 2.

Le support 22 comporte au moins un orifice 24 à 26 et au moins un élément de butée 27 à 29. Dans le mode de réalisation illustré à la figure 1, le support 22 comporte trois orifices 24 à 26 et trois éléments de butée 27 à 29. Chaque élément de butée 27 à 29 est monté sur le support 22, de façon à être en saillie du support 22 et du côté opposé au flasque 21. Les éléments de butée 27 à 29 sont destinés à coopérer avec le volant de commande 2 pour l'entraîner en rotation autour d'un axe Y de rotation lorsque le moteur 20 de l'actionneur 1 est en marche. En particulier, les éléments de butée 27 à 29 sont destinés à coopérer avec les montants 7 à 9 du volant 2. De préférence, les éléments de butées 27 à 29 coopèrent avec les montants 7 à 9 et avec la face interne 10 de la bordure externe 3 du volant 2 lorsque le moteur 20 est en marche. Par ailleurs, l'axe Y de rotation du volant 2 est sensiblement perpendiculaire au plan dans lequel est situé la bordure externe 3. Pour entraîner le volant de commande 2 en rotation, l'utilisateur positionne l'actionneur 1 sur le volant de façon que l'axe principal X soit parallèle à l'axe de rotation Y du volant 2. En outre, on positionne le support 22 sur le volant 3 de sorte que chaque élément de butée 27 à 29 s'insère dans une ouverture 4 à 6. Puis, lorsque le moteur 20 entraîne le support 22 en rotation autour de l'axe de rotation Y du volant 2, chaque élément de butée 27 à 29 vient au contact d'un montant 7 à 9 du volant et entraîne le volant en rotation. En outre, lors de la mise en marche du moteur 20, le centre O du support 22 coïncide automatiquement avec le centre 11 du volant 2, même si les centres O et 11 ne coïncident pas entre eux lors du positionnement de l'actionneur 1 sur le volant 2. Un tel actionneur 1 permet également d'entraîner le volant 2 selon les deux sens de rotation, horaire ou antihoraire.

En particulier, chaque élément de butée 27 à 29 est monté mobile en translation dans un orifice 24 à 26 du support 21. Comme illustré sur la figure 1, chaque orifice 24 à 26 s'étend selon au moins un axe longitudinal perpendiculaire à un axe de rotation X du support 22. Chaque élément de butée 27 à 29 est monté mobile en translation le long d'au moins un axe longitudinal de l'orifice auquel il est associé. Chaque orifice 24 à 26 fait office de guide en translation pour l'élément de butée 27 à 29 qui lui est associé. Chaque élément de butée 27 à 29 est mobile en translation entre une position initiale dans laquelle l'élément de butée peut être introduit dans une ouverture du volant 2, et une position de butée dans laquelle l'élément de butée est en contact avec le volant 2 pour l'entraîner en rotation autour de l'axe de rotation Y. Par exemple, la position initiale d'un élément de butée 27 à 29 peut être l'extrémité de l'orifice 24 à 26, auquel il est associé, qui est la plus proche du centre O du support 22. On a également représenté sur la figure 1, les éléments de butée 27 à 29 dans leur position initiale. Lorsque le rayon R du support 22 est inférieur à celui du volant 2, la position de butée peut être, par exemple l'autre extrémité de l'orifice auquel il est associé, c'est-à-dire l'extrémité la plus éloignée du centre O, ou encore l'extrémité de l'orifice qui est la plus proche de la périphérie du support 22. Dans le cas où le rayon R du support 22 est supérieur à celui du volant, la position de butée de chaque élément de butée 27 à 29 est la position dans laquelle l'élément de butée est en contact avec la face interne 10 de la bordure externe 3 du volant. Lorsque l'élément de butée 27 à 29 est en contact avec la bordure externe, il est également en contact avec l'un des montants 7 à 9 du volant 2. Dans ce cas le maintien du support 22 contre le volant 22 est amélioré et la rotation du volant 2 est facilitée. Les éléments de butée 27 à 29 passent de leur position initiale à leur position de butée lorsque le moteur 20 est mis en marche. De manière générale, lorsque le moteur 20 est arrêté, les éléments de butée 27 à 29 sont dans leur position initiale, qui peut être éventuellement leur position de butée. On introduit les éléments de butée dans les ouvertures du volant 2, de préférence lorsque le moteur 20 est arrêté. Puis on met en marche le moteur 20. Dans ce cas, les éléments de butée 27 à 29 viennent en contact des montants 7 à 9 du volant 2 et ont tendance à s'écarter du centre O du support 22, en translatant dans leur orifice respectif 24 à 26 jusqu'à atteindre leur position de butée. Pour faciliter la translation des éléments de butée 27 à 29, chaque orifice 24 à 26 est orienté selon un angle B aigu non nul avec un rayon du support 22. L'angle B aigu peut être orienté vers la périphérie du support 22 ou vers le centre du support 22. Pour encore faciliter la translation des éléments de butée 27 à 29, chaque élément de butée 27 à 29 peut être monté mobile en rotation autour d'un axe longitudinal de l'élément de butée 27 à 29. Les axes longitudinaux des éléments de butée 27 à 29 sont sensiblement parallèles à l'axe principal X. Ainsi, les éléments de butée 27 à 29 peuvent rouler contre les montants 7 à 9 du volant 2 pour s'écarter plus facilement de leur position initiale et atteindre plus facilement leur position de butée.

Chaque orifice 24 à 26 peut être un trou traversant oblong. Préférentiellement, chaque trou traversant 24 à 26 a une forme coudée de façon à permettre l'entraînement en rotation du volant 2 selon les deux sens de rotation horaire et antihoraire.

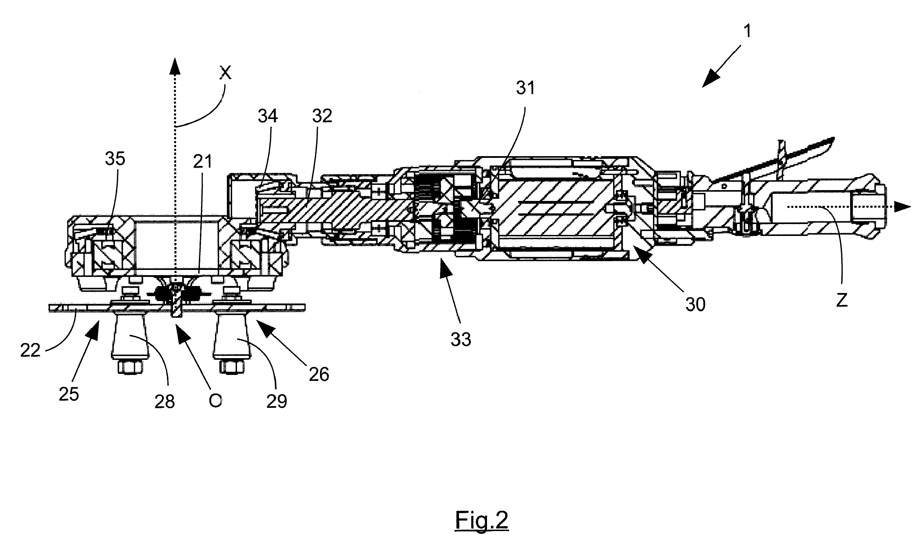

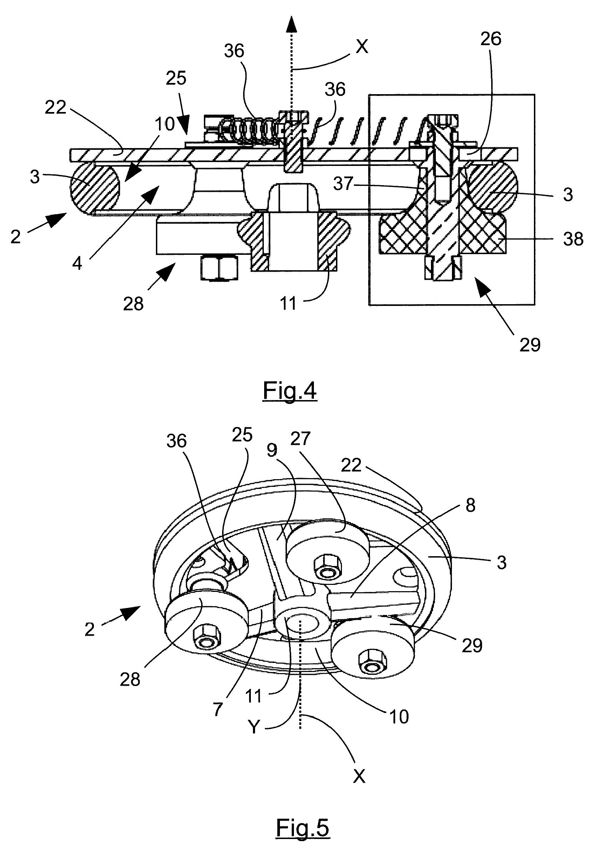

Sur la figure 2, on a représenté schématiquement une vue en coupe selon l'axe A-A de la figure 1. On a également reporté sur la figure 2, certaines références décrites à la figure 1. Le moteur 20 illustré à la figure 2 est un moteur pneumatique. Le moteur 20 comporte au moins une embouchure 30 pour recevoir un gaz à comprimer, tel de l'air, de l'azote ou un gaz rare comme l'argon. Le moteur 20 comprend au moins un arbre moteur 31 apte à être animé en rotation autour d'un axe longitudinal Z du moteur 20 lorsque le moteur 20 est démarré. L'axe longitudinal Z du moteur 20 est sensiblement perpendiculaire à l'axe principal X. L'arbre moteur 31 entraîne un arbre menant 32 coaxial à l'axe longitudinal Z du moteur 20. Avantageusement, le moteur 30 peut comprendre un dispositif de réduction du couple 33, tel un train d'engrenages épicycloïdal 33, couplé entre l'arbre moteur 31 et l'arbre menant 32. L'arbre menant 32 comporte, à une extrémité, un pignon conique fixe 34 qui engrène une roue dentée 35. Le flasque 21 est monté fixe sur la roue dentée 35 pour être entraînée en rotation autour de l'axe principal X. Par exemple, les éléments de butée 27 à 29 ont une forme généralement conique, tel qu'illustré sur la figure 2. Les éléments de butée 27 à 29 peuvent également être en forme de cloche, tel qu'illustré sur la figure 4. La forme conique permet de coincer le volant 2 entre les éléments de butée et le support 22 et ainsi améliorer le maintien du support 22 en contact mécanique sur le volant de commande 2. La forme en cloche des éléments de butée augmente le coincement du volant 2 avec le support 22.

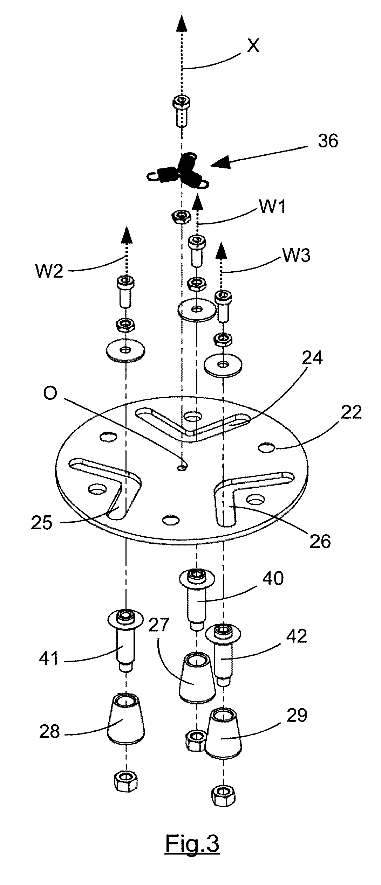

Sur la figure 3, on a représenté une vue éclatée en perspective d'un autre mode de réalisation du support 22 et des éléments de butée 27 à 29 de l'actionneur 1 décrit à la figure 1. Dans ce mode de réalisation, le support 22 comporte des moyens élastiques 36 destinés à être attachés à chaque élément de butée 27 à 29 pour les maintenir dans leur position initiale lorsque le moteur 20 est arrêté. De préférence les moyens élastiques 36 comportent des ressorts attachés respectivement aux éléments de butée 27 à 29. Chaque ressort est en outre attaché au centre O du support 22. Chaque ressort a une force de rappel suffisante pour maintenir l'élément de butée auquel il est attaché lorsque le moteur 20 est arrêté. Ce qui permet de faciliter l'introduction des éléments de butée 27 à 29 dans les ouvertures 4 à 6 du volant 2. Par ailleurs, chaque ressort a une force de rappel qui permet la translation de l'élément de butée dans son orifice associé lorsque le moteur 20 est en fonctionnement. Les moyens élastiques 36 sont particulièrement adaptés lorsque les éléments de butée 27 à 29 sont en forme conique ou en forme de cloche et sont en contact avec la bordure externe 3 du volant 2 en position de butée. Ainsi, lorsqu'on met en marche le moteur 20, les éléments de butée 27 à 29 se mettent en position de butée et entraînent le volant 2 en rotation. Lorsqu'on arrête le moteur 20, sans les moyens élastiques, les éléments de butée restent en position de butée. Dans ce cas, il faut les translater manuellement dans leur position initiale et les débloquer du volant 2 en faisant pivoter le support 22 dans le sens de rotation inverse, puis détacher le support 22 du volant 2. A l'aide des moyens élastiques 36, les éléments de butée reprennent automatiquement leur position initiale, ce qui facilite le détachement du support 22 du volant de commande 2. On a également représenté sur la figure 3 des moyens de mise en rotation des éléments de butée autour de leurs axes longitudinaux W1 à W3. Les moyens de mise en rotation comprennent des plots 40 à 42 qui s'insèrent dans les orifices 24 à 26 respectivement. Chaque élément de butée 27 à 29 comporte un galet en forme de cône ou de cloche qui est monté en rotation autour du plot auquel il est associé. Des vis et écrous permettent de maintenir les galets et les plots mobiles en rotation et en translation dans leur orifice respectif.

Sur la figure 4, on a représenté de façon schématique une vue en coupe du support 22 monté sur le volant de commande 2 d'une vanne. Dans le mode de réalisation illustré à la figure 4, chaque élément de butée a une forme de cloche ayant un col étroit 37 pour rouler sur un montant du volant 2, et une base large 38 pour coincer la bordure externe 3 du volant 2 entre la base large 38 et le support 22. Sur la figure 4, l'élément de butée 29 est dans sa position de butée dans laquelle il coince la bordure externe 3 du volant entre sa base large 38 et le support 22.

Sur la figure 5, on a représenté une vue en perspective du dessous d'un volant de commande 2 sur lequel le support 22 est monté. Sur la figure 5, les éléments de butée 27 à 29 sont chacun dans leur position de butée respective dans laquelle ils sont en contact avec la face interne 10 de la bordure externe 3 du volant de commande 2.

Un tel actionneur est particulièrement adapté aux volants de commande des vannes qui nécessitent des forces importantes pour être manoeuvrés. Cet actionneur est simple à utiliser, il est robuste, et il permet en une seule étape de montage de pouvoir manoeuvrer le volant de commande de la vanne.

## Revendications

1. Actionneur de vanne équipée d'un volant de commande (2), le volant de commande (2) comportant une bordure externe (3) et au moins une ouverture (4 à 6), l'actionneur comprenant un moteur (20) et un support (22) configuré pour être entraîné en rotation par le moteur (20), **caractérisé en ce que** le support (22) comporte au moins un orifice (24 à 26) et au moins un élément de butée (27 à 29) monté mobile en translation dans ledit orifice entre une position initiale dans laquelle l'élément de butée (27 à 29) est introduit dans ladite ouverture (4 à 6) du volant de commande (2) et une position de butée dans laquelle l'élément de butée (27 à 29) est en contact avec le volant de commande (2) pour l'entraîner en rotation, et **en ce que** les éléments de butée (27 à 29) sont configurés pour s'écarter d'un centre (O) du support (22) en translatant dans leur orifice respectif (24 à 26) jusqu'à atteindre leur position de butée lorsque le moteur (20) est mis en marche.

2. Actionneur selon la revendication 1, dans lequel chaque orifice s'étend selon au moins un axe longitudinal perpendiculaire à un axe de rotation (X) du support (22), et chaque élément de butée (27 à 29) est monté mobile en translation le long d'au moins un axe longitudinal de l'orifice auquel il est associé.

3. Actionneur selon la revendication 1, dans lequel le support (22) comporte plusieurs orifices (24 à 26) et plusieurs éléments de butée (27 à 29) montés mobiles en translation dans respectivement les orifices (24 à 26), chaque orifice (24 à 26) ayant une forme coudée.

4. Actionneur selon la revendication 1 ou 2, dans lequel chaque élément de butée (27 à 29) est en outre monté mobile en rotation autour d'un axe (X) sensiblement perpendiculaire au support (22).

5. Actionneur selon l'une des revendications 1 à 3, dans lequel chaque élément de butée (27 à 29) a une forme globalement conique.

6. Actionneur selon l'une des revendications 1 à 4, dans lequel chaque élément de butée (27 à 29) a une forme de cloche configurée pour coincer la bordure externe (3) du volant de commande (3) entre l'élément de butée (27 à 29) et le support (22) lorsque l'élément de butée (27 à 29) est dans sa position de butée.

7. Actionneur selon l'une des revendications 2 à 5, dans lequel les éléments de butée (27 à 29) sont en matière plastique.

8. Actionneur selon l'une des revendications 2 à 6, dans lequel le support (22) a une forme globalement circulaire et chaque coude de chaque orifice (24 à 26) forme un angle (B) aigu non nul avec un rayon (R) du support (22), et en ce que l'angle (B) est orienté vers le centre (O) du support (22).

9. Actionneur selon l'une des revendications 1 à 7, comprenant des moyens élastiques (36) attachés à chaque élément de butée (27 à 29) pour les maintenir dans leur position initiale lorsque le moteur (20) est arrêté.
